# EUROPÄISCHE PATENTSCHRIFT

(11) **EP 2 171 337 B1**
(45) Veröffentlichungstag und Bekanntmachung des Hinweises auf die Patenterteilung: **02.11.2011**
(21) Anmeldenummer: 08775341.4
(22) Anmeldetag: 24.07.2008
(51) Int. Cl.: F16L 53/00, F16L 21/06, F16L 25/00

(54) **KONFEKTIONIERTE MEDIENLEITUNG**
PREASSEMBLED MEDIA LINE
CONDUITE A FLUIDES SURMOULEE

(30) Priorität: 26.07.2007 DE 202007010502 U
(43) Veröffentlichungstag der Anmeldung: 07.04.2010
(73) Patentinhaber: Voss Automotive GmbH, 51688 Wipperfürth (DE)
(72) Erfinder: ISENBURG, Marco, 40885 Ratingen (DE); PETERS, Frank, 51789 Lindlar (DE); STELLUTO, Michele, 42859 Remscheid (DE); BRANDT, Josef, 51688 Wipperfürth (DE); ROSENFELDT, Sascha, 44137 Dortmund (DE); KLEHR, Adrian, 58802 Balve (DE)
(74) Vertreter: Patentanwälte Dr. Solf & Zapf
(86) Internationale Anmeldenummer: PCT/EP2008/059735
(87) Internationale Veröffentlichungsnummer: WO 2009/013342

(56) Entgegenhaltungen:
- EP-A- 0 379 635
- WO-A-2005/124219
- DE-U1-202006 003 590

## Beschreibung

Die vorliegende Erfindung betrifft eine konfektionierte Medienleitung nach dem Oberbegriff des Anspruchs 1.

In Fahrzeugen müssen immer öfter Fluide an verschiedene Stellen transportiert werden, die schon bei relativ geringen Temperaturen einfrieren, z. B. Harnstoff-Wasserlösungen frieren bei -11 ° C ein. Deshalb ist es bekannt, die hierzu benötigten Medienleitungen zu beheizen. Da die Fahrzeuge immer kompakter gebaut werden, müssen die beheizbaren f!uidführenden Leitungen auch an Fahrzeugstellen verlegt werden, die während des Fahrzeugbetriebs sehr hohen Temperaturen, z. B. 160 ° C und mehr ausgesetzt sind. Zudem ist es aber auch wichtig, eine möglichst vollständige Beheizung der Medienleitung, d. h. der Medienleitung einschließlich Verbinder zu gewährleisten.

Eine gattungsgemäße konfektionierte Medienleitung ist aus der WO2005/124219 bekannt. Hierbei erfolgt die Verbindung des Leitungsverbinders mit einem Gegenkupplungsteil über zwei durch Einstecken miteinander verbindbare Abschnitte, und zwar einem Kupplungsabschnitt und einem Gegenkupplungsabschnitt derart, dass der Kupplungsabschnitt in den Gegenkupplungsabschnitt eingesteckt wird und in diesem dichtend gehalten ist. Die Beheizung des Kupplungsabschnitts erfolgt hierbei innerhalb eines Gehäuses, das das Leitungsende umfasst, in den der Kupplungsabschnitt eingesteckt ist. Da die Verbindung zwischen dem Gegenkupplungsteil und dem Kupplungsabschnitt außerhalb dieses Gehäuses liegt, wird im Verbindungsbereich verminderte Heizleistung zur Verfügung gestellt, was aber nachteilig ist

Aus der europäischen Patentanmeldung 0 379 635 ist ein wärmeisoliertes Verbindungsstück für beheizbare Schläuche bekannt, bei dem die Schlauchenden der Schläuche von einem Hüllrohr gemeinsam umfasst sind, so dass eine durchgehende Beheizung auch im Verbindungsbereich möglich ist und sichergestellt wird. Jedoch sind die beiden zu verbindenden Schlauchleitungen nicht lösbar miteinander verbunden.

Der vorliegenden Erfindung liegt nun die Aufgabe zu Grunde, eine konfektionierte Medienleitung zur Verfügung zu stellen, die einerseits eine nahezu durchgehende Beheizung ermöglicht und andererseits einen guten Wärmeschutz gegen Warmebeeinflussung von außen, insbesondere im kritischen Verbindungsbereich zwischen Medienleitung und Verbinder gewährleistet.

Die vorliegende Aufgabe wird durch die Merkmal des kennzeichnenden Teils des Anspruch 1 gelöst. Hierbei ist es insbesondere vorteilhaft, wenn das Gehäuse an seinem den Kupplungsabschnitt umschließenden Gehäuseabschnitt die Rastmittel zum Verrasten mit dem Gegenkupplungsteil aufweist. Durch die erfindungsgemäße Aufteilung der Dichtfunktion und der Haltefunktion auf den Verbinderkörper und das Gehäuse kann der Heizdraht in den Bereich der am Gehäuse ausgebildeten Rastmittel geführt werden, so dass eine weitgehende Beheizung des Verbinders möglich ist. Das einerseits den Verbindungskörper und andererseits das Ende der Medienleitung umschließende Gehäuse, das vorzugsweise aus einem wärmeisolierenden Material besteht, gewährleistet einen Wärmeschutz für die Verbindungsstelle zwischen Medienleitung und Leitungsverbinder. Da das erfindungsgemäße Gehäuse aus vorzugsweise zwei Gehäusehalbschalen hergestellt ist, kann das Gehäuse nachträglich um den Verbindungskörper mit der angeschlossenen Medienleitung und nach Durchführung des Heizdrahtes und Fixierung desselben am Umfang des Kupplungsabschnittes aufgebracht werden, wobei das erfindungsgemäße Gehäuse gleichzeitig eine Haltefunktion für den Leitungsverbinder und eine Fixierung der Medienleitung ermöglicht Zudem dient es als Wärmeschutz gegen äußere Wärmestrahlung. Gleichzeitig dient das erfindungsgemäße Gehäuse auch als Abschirmung gegen die von dem Heizdraht erzeugte Wärme, so dass diese nicht nach außen dringen kann. Das erfindungsgemäße Verbinderstück kann in Bezug auf seine Materialeigenschaften an das zu transportierende Fluid angepasst werden, um eine möglichst hohe Wärmeleitfähigkeit und chemische Beständigkeit zu erreichen. Beispielsweise kann der Verbinderkörper aus Edelstahl bestehen, wenn die Leitung zum Transport von Harnstofflösungen verwendet wird. Weiterhin ist es durch die zweiteilige Ausbildung des Leitungsverbinders aus einem inneren Verbinderkörper und einem äußeren Gehäuse möglich, diese beiden Teile derart zu dimensionieren, dass ein innerer umfangsgemäßer Luftspalt zwischen beiden Teilen besteht, so dass eine Luftspaltisolierung realisiert werden kann. Die Trennung von Verbinderkörper und Gehäuse ermöglicht es ebenfalls, das Gehäuse im Bereich des Anschlussabschnittes der Medienleitung in Bezug auf seine Länge den jeweiligen Anforderungen anzupassen, so dass es sich so weit wie notwendig über die Medienleitung erstrecken kann, um diese und um die Anschlussstelle der Medienleitung zu schützen. Vorteilhafte Ausführungen der Erfindung sind in den Unteransprüchen enthalten, wobei insbesondere eine gleichmäßige Wärmeverteilung über den gesamten Kupplungsabschnitt des Leitungsverbinders dadurch erreicht werden kann, dass in einem von dem Heizdraht nicht unmittelbar beheizten Bereich ein Wärmeleitelement an dem Kupplungsabschnitt angeordnet ist, das die Wärme von dem beheizten Bereich in den übrigen Bereich des Kupplungsabschnitts weiterleitet.

Anhand der in den beiliegenden Zeichnungen dargestellten Ausführungsbeispiele wird die Erfindung näher erläutert.

Es zeigen:
- Fig. 1: einen Längsschnitt durch eine erfindungsgemäße konfekdonierte Leitung,
- Fig. 2: einen Längsschnitt durch eine Halbschale eines efindungsgemäßen Gehäuses,
- Fig.3: eine Seitenansicht einer weiteren Ausführung einer erfindungsgemäßen konfektionierten Leitung zum Teil geschnitten,
- Fig. 4: eine Explosionsansicht der Leitung gemäß Fig. 3,
- Fig. 5: einen Längsschnitt durch eine weitene Ausführungsform einer erfindungsgemäßen konfektionierten Leitung,
- Fig. 6: einen Längsschnitt durch einen Verbinderkörper gemäß Fig. 5,
- Fig. 7: eine Ansicht des Verbinderkörpers gemäß Fig. 6,
- Fig. 7a: eine Ansicht gemäß dem Pfeil VII in Fig. 7,
- Fig. 8a bis 8d: unterschiedliche Ausführungen von Wärmeleitelementen gemäß der Erfindung,
- Fig. 9 und 10: Seitenansichten einer erfindungsgemäßen Gehäusehalbschale,
- Fig. 11: eine Ansicht von zwei Teilansichten zur Darstellung der unterschiedlichen Lage der Halteärmchen gemäß der Erfindung,
- Fig. 12: eine Ansicht einer weiteren Ausführungsform eines erfindungsgemäßen Verbinderkörpers und
- Fig. 13: einen Längsschnitt durch den Verbinderkörper gemäß Fig. 12.

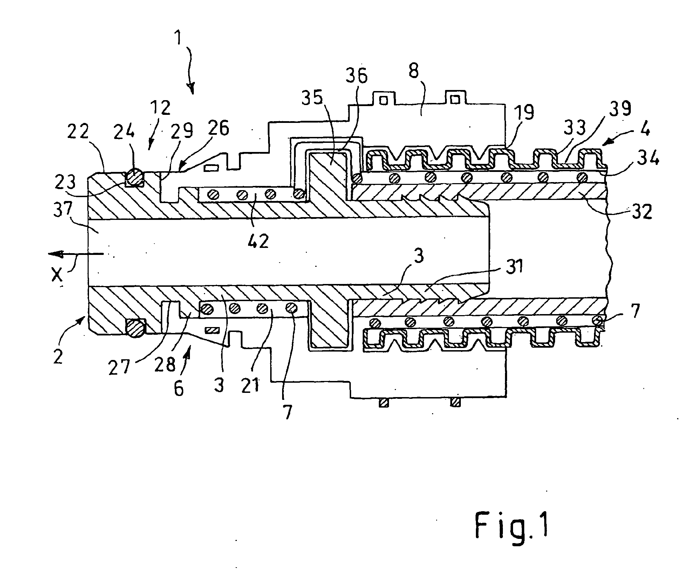

Wie sich aus Fig. 1 ergibt, besteht eine erfindungsgemäße konfektionierte Leitung aus einem Leitungsverbinder 1, der aus einem Verbinderkörper 2 mit einem Anschlussabschnitt 3, an dem eine Medienleitung 4 angeschlossen ist, und mit einem Kupplungsabschnitt 6 zum dichtenden, vorzugsweise lösbaren Verbinden mit einem Gegenkupplungsteil. Dieses Gegenkupplungsteil ist nicht dargestellt, da es sich dabei um ein übliches Gegenkupplungsteil handelt, das insbesondere eine lösbare steckbare Verbindung mit dem Kupplungsabschnitt 6 ermöglicht.

Die Medienleitung 4 ist mit einem Heizdraht 7 versehen, wobei der Heizdraht 7 im Verbindungszustand von dem Verbinderkörper 2 und der Medienleitung 4 derart weitergeführt ist, dass er zumindest teilweise am Kupplungsabschnitt 6 angeordnet ist. Erfindungsgemäß ist vorgesehen, dass bei dem Leitungsverbinder 1 die Dichtfunktion zwischen diesem und dem Gegenkupplungsteil und seine Haltefunktion in Bezug auf das Gegenkupplungsteil zwischen dem Verbinderkörper 2 und einem den Verbinderkörper 2 und die Medienleitung 4 endseitig umgebenden Gehäuse 8 aufgeteilt ist. Das Gehäuse 8 ist vorzugsweise aus zwei Gehäusehalbschalen 9 gebildet, die form- und/oder kraftschlüssig, insbesondere rastend miteinander verbunden sind. Hierzu sind am Außenumfang im Verbindungsbereich der beiden Gehäusehalbschalen 9 komplementäre Rastmittel 11 ausgebildet. Die Gehäusehalbschalen 9 können auch verklebt oder verschweißt werden. Vorteilhafterweise weist der Kupplungsabschnitt 6 die Dichtmittel 12 auf, die zur Abdichtung gegenüber dem Gegenkupplungsteil dienen, und das Gehäuse 8 besitzt die Rastmittel 13 zur rastenden Verbindung mit dem Gegenkupplungsteil.

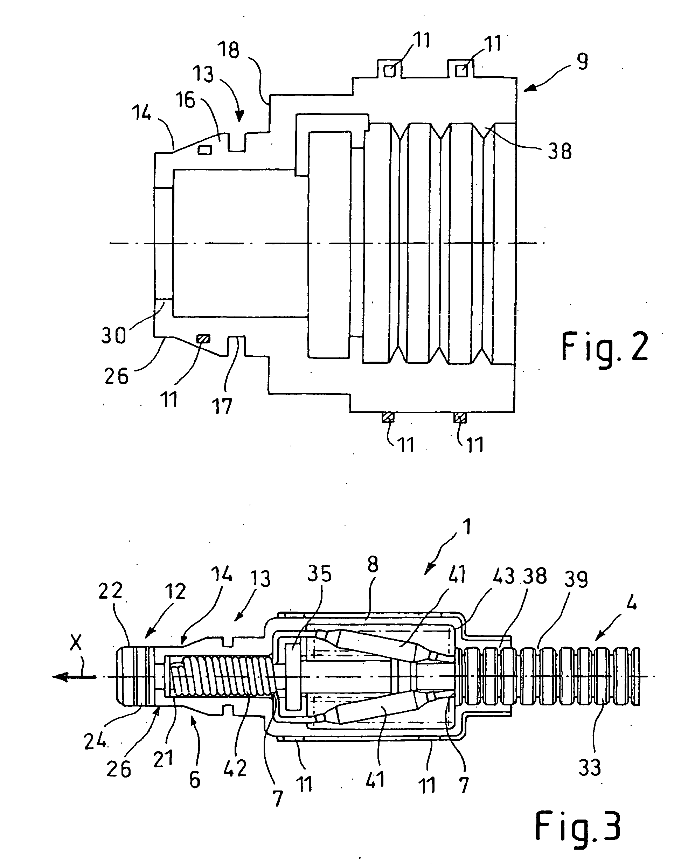

Wie in den Fig. 1 und 2 dargestellt ist, sind die Rastmittel 13 an einem den Kupplungsabschnitt 6 umschließenden Gehäuseabschnitt 14 ausgebildet. Hierbei bestehen insbesondere die Rastmittel 13 aus einem am Gehäuseumfang ausgebildeten umfangsgemäß verlaufenden Rastnocken 16, hinter dem in Einsteckrichtung X gesehen eine Rastnut 17 ausgebildet ist. In diese Rastnut 17 kann dann ein im Gegenkupplungsteil ausgebildetes, z. B. federnd gelagertes Rastmittel im eingesteckten Zustand des Kupplungsabschnittes 6 einrasten. Weiterhin weist das erfindungsgemäße Gehäuse 8 in Einsteckrichtung X gesehen vor der umlaufenden Rastnut 17 einen äußeren Anschlag 18 auf. Dieser Anschlag 18 begrenzt den Einsteckweg des Kupplungsabschnittes 6 in das Gegenkupplungsteil.

Wie insbesondere aus Fig. 1 ersichtlich ist, ist zwischen dem Gehäuse 8 und dem Verbindungskörper 2 im Bereich des Anschlussabschnittes 3 ein Umfangsspaltabschnitt 19 zur Aufnahme der Medienleitung 4 ausgebildet. Im Bereich der Rastmittel 13 ist zwischen dem Gehäuse 8 und dem Anschlussabschnitt 3 ein umfänglicher Spaltbereich 21 vorhanden, in dem der Heizdraht 7 verläuft, wobei der Heizdraht 7 insbesondere in Form einer den Kupplungsabschnitt 6 umgebenden spiralförmigen Wicklung angeordnet ist. Erfindungsgemäß ist somit der Heizdraht 7 von der Medienleitung 4 in den Kupplungsabschnittsbereich weitergeführt, wo er den Kupplungsabschnitt 6 mit einer Heizwicklung 42 umgibt. Hierdurch wird ermöglicht, dass die Beheizung der erfindungsgemäß konfektionierten Leitung im Gegenkupplungsteil beginnt, so dass praktisch eine durchgängige lückenlose Beheizung der erfindungsgemäßen konfektionierten Leitung möglich ist. Der erfindungsgemäße Verbinderkörper 2 ist derart bemessen, dass der Kupplungsabschnitt 6 aus dem Gehäuse 8 mit einem im Querschnitt kreiszylindrischen Steck- und Dichtabschnitt 22 herausragt. Der Steck- und Dichtabschnitt 22 besitzt an seiner Umfangsfläche eine Umfangsnut 23 mit einem in dieser angeordneten Umfangsdichtung 24, insbesondere einem O-Dichtring. Die Umfangsnut 23 und die Umfangsdichtung 24 bilden die Dichtmittel 12. Es liegt jedoch ebenfalls im Rahmen der Erfindung, andere Dichtungsmöglichkeiten zwischen dem Verbinderkörper 2 und dem Gegenkupplungsteil vorzusehen, wie sie Stand der Technik sind. Der Außendurchmesser des Steck- und Dichtabschnittes 22 sowie ein sich an diesen anschließender im Querschnitt kreiszylindrischer Einführungsabschnitt 26 des Gehäuses 8 besitzen denselben Außendurchmesser. Wie insbesondere aus Fig. 2 zu erkennen ist, sind in Einsteckrichtung X gesehen am hinteren Ende des Einführungsabschnittes 26 die Rastmittel 13 ausgebildet.

Erfindungsgemäß ist nun weiterhin vorgesehen, dass in Einsteckrichtung gesehen hinter dem Steck- und Dichtabschnitt 22 ein sich gegenüber dessen Außendurchmesser im Durchmesser verringerter Körperabschnitt 27 anschließt. An der Umfangsfläche dieses Körperabschnittes 27 ist ein ringförmiger Bund 28 angeformt, so dass zwischen diesem und dem Steck- und Dichtabschnitt 22 eine Nut 29 zur Aufnahme eines an der Innenseite des Gehäuses 8 an dessen in Einsteckrichtung gesehen vorderen Ende ein angeformter Haltefortsatz 30 ausgebildet ist. Durch diese Ausbildung wird gewährleistet, dass im montierten Zustand des Gehäuses 8 das Gehäuse 8 formschlüssig mit dem Verbinderkörper 2 gehalten ist.

In Fig. 1 ist dargestellt, dass an dem dem Steck- und Dichtabschnitt 22 gegenüberliegenden Ende des Verbinderkörpers 2 ein Einsteckdom 31 zur kraftund/oder formschlüssigen Verbindung der Medienleitung 4 angeformt ist. Die Medienleitung 4 besteht aus einem inneren Leitungsrohr 32, an dessen Umfang der Heizdraht 7 angeordnet ist, insbesondere spiralförmig umwickelt ist, sowie einem äußeren Schutzrohr 33, das insbesondere als Wellrohr geformt ist. Der Heizdraht 7 ist mittels eines diesen umgebenden Klebeband 34 auf dem Leitungsrohr 32 fixiert. Somit wird der Einsteckdom 31 mit dem Leitungsrohr 32 verbunden, indem dieser in das Leitungsrohr 32 eingepresst wird, so dass eine form- und kraftschlüssige Verbindung erreicht wird. Das Leitungsrohr 32 ist vorzugsweise ein PA-Rohr. Vorteilhafterweise ist zwischen dem im Durchmesser verringerten Körperabschnitt 27 und dem Einsteckdorn 31 am Verbinderkörper 2 ein umlaufender Anschlag 35 für die Medienleitung 4 vorhanden. Der Außendurchmesser des Anschlags 35 kann dem Außendurchmesser der Medienleitung 4 im Wesentlichen angepasst sein, wobei zwischen dem Außenumfang des Anschlags 35 und einer gegenüberliegenden Innenwand des Gehäuses 8 ein Spalt 36 zum Durchführen des Heizdrahtes 7 vorhanden ist. Der Verbinderkörper 2 weist eine Durchgangsbohrung 37 auf, durch die ein zu transportierendes Medium von der Medienleitung 4 zum Gegenkupplungsteil geleitet wird. Das Gehäuse 8 besteht vorteilhafterweise aus einem Kunststoff mit guten Wärme-Isolationseigenschaften, insbesondere aus einem glasfaserverstärkten PPA (Polyphtalamid). Das Gehäuse 8 und der Verbinderkörper 2 können vorteilhafterweise derart zueinander dimensioniert werden, dass zwischen diesen im Wicklungsbereich des Heizdrahtes 7 auf dem Kupplungsabschnitt 6 und im Übergangsbereich zum Anschlussabschnitt 3 ein Luftspalt ausgebildet ist, so dass die Wärme-Isolationseigenschaften verbessert werden. Das Gehäuse 8 weist im Bereich des Umfangsspaltabschnittes 19 an seiner Innenwand Umfangsrippen 38 auf, die in Wellentäler 39 des als Wellrohr ausgebildeten Schutzrohrs 33 eingreifen. Hierdurch erfolgt eine Fixierung der Medienleitung 4 innerhalb des Gehäuses 8.

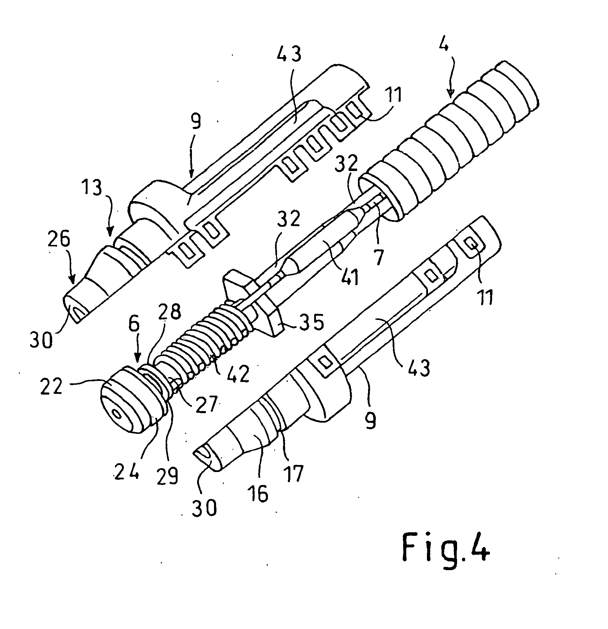

In den Fig. 3 und 4 ist eine weitere Ausführungsform der erfindungsgemäßen konfektionierten Leitung dargestellt. Hierbei sind gleich Teile wie in den Fig. 1 und 2 mit denselben Bezugsziffern gekennzeichnet.

In Abweichung zu der Ausführung in Fig. 1 ist in Fig. 3 dargestellt, dass der Heizdraht 7, der von der Medienleitung 4 kommt, durch eine übliche Crimpverbindung 41 mit der um den Kupplungsabschnitt 6 angeordneten Heizwicklung 42 verbunden ist. Zur Aufnahme der Crimpverbindung 41 ist das Gehäuse 8 zum Vergrößern des Innenraums mit seitlichen Ausbuchtungen 43 versehen. Der Anschlag 35 dient als Anschlag für das innere Leitungsrohr 32, wobei das Schutzrohr 33 nicht bis zum Anschlag 35 geführt ist, damit der Innenraum für die Crimpverbindung 41 frei bleibt. Der Anschlag 35 besitzt eine polygonale, insbesondere sechseckige Umfangskontur, so dass er als Verdrehsicherung dient.

Es liegt ebenfalls im Rahmen der Erfindung, wenn in Abänderung zu den beschriebenen Ausführungsbeispielen in den Innenraum des Gehäuses 8 von außen eine elektrische Leitung zur Spannungsversorgung eingeführt und mit dem Heizdraht 7 sowie der Heizwicklung 42 verbunden wird. Weiterhin kann der Innenraum des Gehäuses 8 mit einer isolierenden Vergussmasse vergossen werden. Der Verbinderkörper 2 kann auch derart einendig ausgebildet sein, dass er mit dem Leitungsrohr 32 stoffschlüssig, z. B. durch Verschweißen oder Verkleben verbindbar ist. Hierbei bestehen die zu verbindenden Teile dann vorzugsweise aus gleichen Materialien. An Stelle einer Fixierung des Heizdrahtes 7 auf dem Leitungsrohr 32 mit einem Klebeband kann der Heizdraht 7 auch in einer Kunststoffschicht des Leitungsrohrs 32 eingegossen sein.

In allen gezeigten Ausführungsbeispielen besitzt das Gehäuse 8 sowohl eine Schutzfunktion als auch eine Haltefunktion für den Verbinderkörper 2 und die Medienleitung 4.

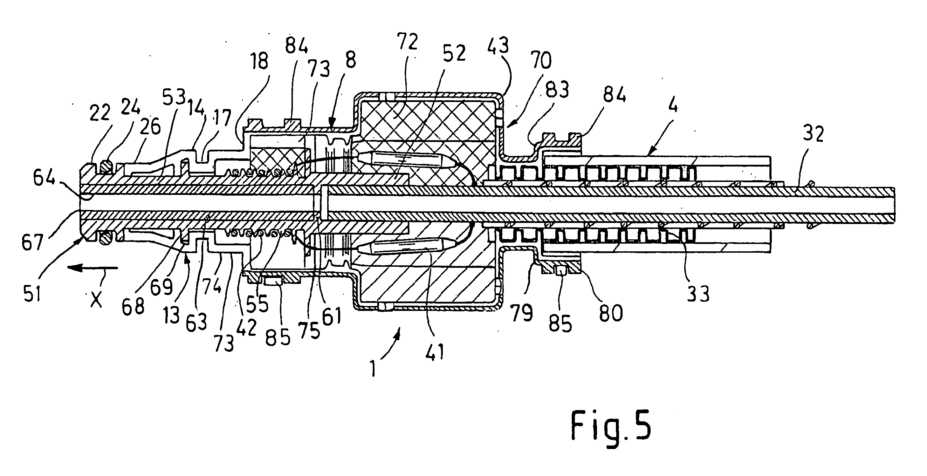

Fig. 5 zeigt eine weitere Ausführungsvariante einer erfindungsgemäßen konfektionierten Leitung, wobei gleiche Teile wie in den Fig. 1 bis 4 mit denselben Bezugsziffern versehen sind.

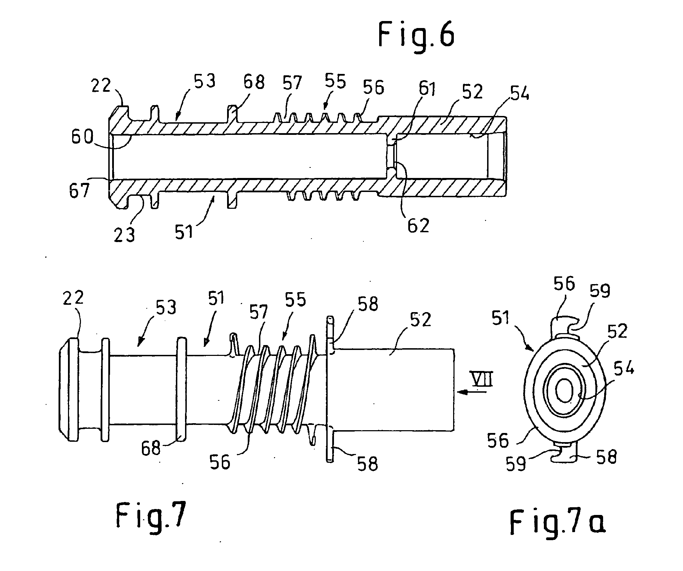

Bei dieser Ausführungsform besitzt der Leitungsverbinder 1 einen Verbindungskörper 51 aus Kunststoffmaterial, z. B. Polyamid mit Glasfaserverstärkung mit einem Anschlussabschnitt 52 für die Medienleitung 4 und mit einem Kupplungsabschnitt 53 zum dichtenden Verbinden mit einem Gegenkupplungsteil, siehe auch Fig. 6 und 7. Der Anschlussabschnitt 52 ist als hohlzylindrische Hülse mit einer Innenbohrung 54 ausgebildet. In diese Innenbohrung 54 ist die Medienleitung 4 mit ihrem inneren Leitungsrohr 32 eingeführt und befestigt. Das Leitungsrohr 32 besteht vorzugsweise aus Kunststoff, so dass das Leitungsrohr 32 mit dem Anschlussabschnitt 52 durch eine Laserverschweißung verbunden werden kann. An den Anschlussabschnitt 52 schließt sich ein Wicklungsabschnitt 55 an, auf dem die Heizwicklung 42 aufgewickelt ist. Hierzu weist der Wicklungsabschnitt 55 eine schraubenlinienförmig an seinem Umfang verlaufende Rippe 56 auf. Zwischen der schraubenlinienförmig verlaufenden Rippe 56 wird ein ebenfalls schraubenlinienförmig verlaufender Abstandsbereich 57 zwischen den Rippenwindungen erzeugt, der zur Aufnahme des Wicklungsdrahtes der Heizwicklung 42 dient. Zwischen dem Wicklungsabschnitt 55 und dem Anschlussabschnitt 52 am Anfang der Rippe 56 sind zwei diametral gegenüberliegende Halteärmchen 58 angeformt, die radial von dem Wicklungsabschnitt 55 abstehen, siehe Fig. 7a. Diese Halteärmchen 58 dienen zum Fixieren des Drahtes der Heizwicklung 52 und verhindern ein selbständiges Abwinkein des Heizdrahtes in einem Teilmontagezustand. Die Halteärmchen 58 weisen zur Einleitung des Drahtes der Heizwicklung 42 eine randoffene Öse 59 auf, so dass sich eine Hakenform ergibt. Der Wicklungsabschnitt 55 befindet sich zwischen dem Anschlussabschnitt 52 und dem Kupplungsabschnitt 53 und in Bezug auf das Gehäuse 70 befindet sich der Wicklungsabschnitt 55 in Einsteckrichtung X gesehen, vor dem die Rastmittel 13 aufweisenden Gehäuseabschnitt 14, worin ein Unterschied zu der Ausführungsform der Fig. 1 bis 4 liegt. Hierdurch ergibt sich eine Verlängerung des Kupplungsabschnitts 53 gegenüber dem Kupplungsabschnitt 6 gemäß Fig. 1 bis 4. Innerhalb des Kupplungsabschnittes 53 und dem Wicklungsabschnitt 55 verläuft eine Bohrung 60, die zweckmäßigerweise den gleichen Innendurchmesser besitzt, wie die Innenbohrung 54. Im gezeigten Ausführungsbeispiel befindet sich zwischen der Innenbohrung 54 und der Bohrung 60 ein umlaufender, radial nach innen ragender Ringkragen 61, der eine Anschlagfunktion besitzt. Der Ringkragen 61 umschließt eine

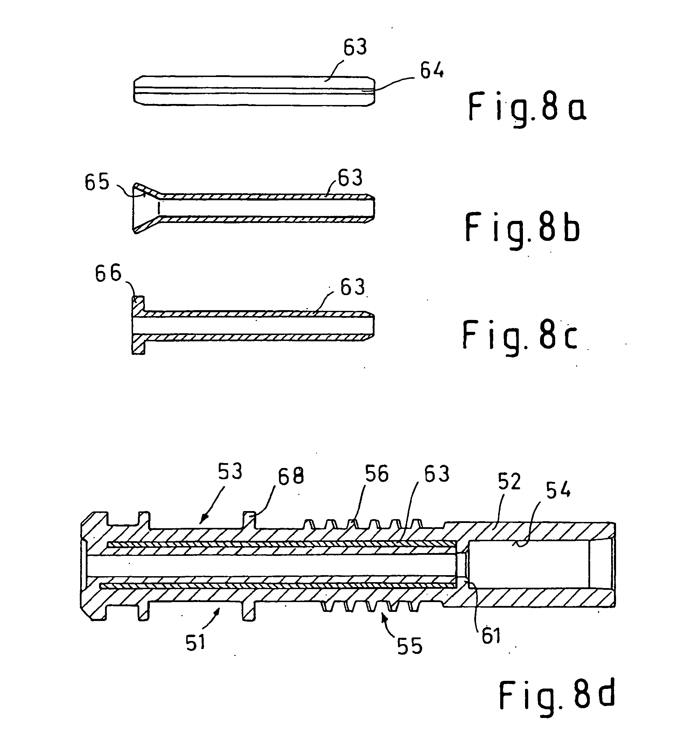

Durchlassöffnung 62. Die radiale Höhe des Ringkragens 61 entspricht zweckmäßigerweise der Wandstärke des Leitungsrohrs 52, siehe Fig. 5. Hierdurch ist der Durchflussquerschnitt der Durchlassöffnung 62 gleich dem Durchflussquerschnitt des Leitungsrohrs 32. Wie ebenfalls aus Fig. 5 ersichtlich ist, ist innerhalb des Erstreckungsbereiches des Wicklungsabschnittes 55 und des Kupplungsabschnitts 53 in deren Bohrung 60 eine aus einem gut wärmeleitenden Material, insbesondere Metall, wie beispielsweise Kupfer, Aluminium oder ggf. Edelstahl bestehendes Wärmeleitelement 63 angeordnet. Im dargestellten Ausführungsbeispiel ist dieses Wärmeleitelement 63 als hohlzylindrische Hülse geformt und besitzt in Inneren eine Durchgangsöffnung 64, mit einem Öffnungsquerschnitt entsprechend demjenigen der Durchlassöffnung 62. Durch diese Querschnittsbemessung ergibt sich ein gleichbleibender Durchflussquerschnitt von dem Leitungsrohr 32 bis zum Ende des Kupplungsabschnitts 53. Somit besitzt das rohrförmige Wärmeleitelement 63 insbesondere die gleiche Wandstärke wie das Leitungsrohr 32. Das hülsenförmige Wärmeieitetement 63 wird zweckmäßigerweise in die Bohrung 60 eingeschoben, wobei der Ringkragen 61 als Tiefenanschlag wirkt. Das hülsenförmige Wärmeleitelement 63 sitzt in der Bohrung 60 vorzugsweise mit Kraftschluss, indem es in die Bohrung 60 eingepresst ist. Auch kann das hülsenförmige Wärmeleitelement 63 mittels Rast- oder Halteelementen innerhalb der Bohrung 60 form- und/oder kraftschlüssig fixiert werden. Wie beispielsweise in Fig. 8d ausgeführt ist, kann das erfindungsgemäße Wärmeleitelement 63 auch innerhalb des aus Kunststoff bestehenden Verbindungskörpers 51 durch Umspritzen eingebettet sein. Sofern das Wärmeleitelement 63 aus Kunststoff besteht, und zwar aus einem gut wärmeleitenden Kunststoff, ist es möglich, den Verbinderkörper 51 und das Wärmeleitelement 63 im sogenannten 2K-Verfahren als einstückiges Bauteil herzustellen. An Stelle einer geschlossenen Hülsenausführung kann das Wärmeleitelement 63 auch einen Längsschlitz 64, siehe Fig. 8a, besitzen, und ist somit ähnlich einem Spannstift ausgebildet. Wie in Fig. 8b gezeigt ist, kann das hülsenförmige Wärmeleitelement 63 auch eine einendige trichterförmige Aufweitung 65 aufweisen, die als Anschlag dient, und in einer angepassten Aufweitung der Bohrung 60 im Bereich ihrer vorderen Öffnung 67 zentriert sitzen. In Fig. 8c ist eine Variante mit einem ringförmigen Anschlagkragen 66 gezeigt, der in eine entsprechend angepasste Ausnehmung der Bohrung 60 im Bereich ihrer vorderen Öffnung 67 aufgenommen wird. Durch die Ausbildung der Aufweitung 65 bzw. des Anschlagkragens 66 kann ein innerer Anschlag im Inneren des Verbinderkörpers 53 entfallen, und das eingesetzte Wärmeleitelement 63 dient dann endseitig als Innenanschlag für das einzuführende Leitungsrohr 32.

Das Wärmeleitelement 63 kann ebenfalls aus einem oder mehreren, z. B. streifenförmigen Wärmeleitzuschnitten bestehen. Alternativ liegt es ebenfalls im Rahmen der Erfindung, wenn das hülsenförmige Wärmeleitelement 63 endseitig eine Anschlussdomkontur zum Aufdornen des Leitungsrohres 32 besitzt. Sofern das Wärmeleitelement 63 unmittelbar von der innerhalb des Leitungsrohres 32 strömenden Flüssigkeit kontaktiert wird, ist es zweckmäßig, das Wärmeleitelement 63 aus einem korrosionsbeständigen Metall herzustellen oder mit einer korrosionsbeständigen Beschichtung zu versehen. Auch kann eine Oberflächenbehandlung des Wärmeleitelementes 63 zur Verbesserung der Wärmeleitfähigkeit und/oder zur Verminderung der Rauigkeit erfolgen. Durch Verminderung der Rauigkeit wird z. B. beim Durchleiten einer Harnstofflösung das Ablagem von Harnstoff-Kristallen an der Wärmeleitelementwandung weitgehend vermieden.

Weiterhin weist der Verbinderkörper 51 im Bereich zwischen dem Wicklungsabschnitt 55 und seinem vorderen Dichtabschnitt 22 einen radial nach außen abstehenden Ringbund 68 auf. Dieser Ringbund 68 sitzt in einer angepassten ringförmigen Ausnehmung 69 des Gehäuses 70 in Einsteckrichtung X gesehen hinter dem Rastmittel 13, wodurch der Verbinderkörper 51 im Gehäuse zusätzlich in axialer und radialer Richtung fixiert wird.

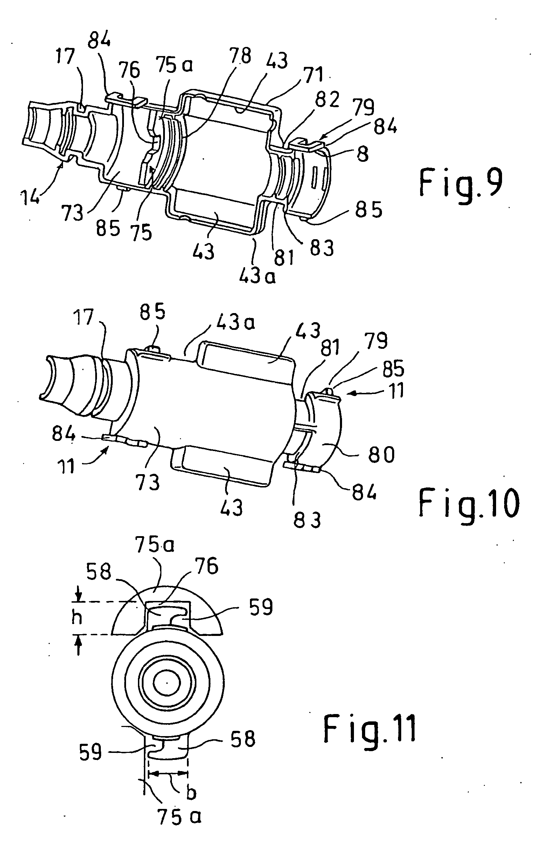

Wie in Fig. 5 dargestellt ist, werden der Verbinderkörper 51 und die Medienleitung 4 an ihrem endseitigen Anschlussbereich von dem Gehäuse 70 umgeben, das ebenfalls, wie in den Fig. 1 bis 4 dargestellt ist, aus zwei miteinander verbindbaren Gehäusehalbschalen 71 besteht. Diese das Gehäuse 70 bildenden Halbschalen 71 umfassen den Verbinderkörper 51 und das Anschlussende der Medienleitung 4 formschlüssig. Bei dem in Fig. 5 dargestellten Ausführungsbeispiel ist eine Aufteilung der Dicht- und Rastfunktion, wie zu den Fig. 1 bis 4 beschrieben, zwischen dem Verbinderkörper 51 und dem Gehäuse 70 vorhanden. Das Gehäuse 70 weist, wie auch zu den Fig. 3 und 4 beschrieben ist, diametral gegenüberliegende Ausbuchtungen 43 auf, siehe Fig. 9 und 10. Diese Ausbuchtungen 43 dienen zur Aufnahme der Crimpverbindung 41 zwischen dem Heizdraht 7 und der Heizwicklung 42. Diese Ausbuchtungen 43 können mit einer Vergussmasse 72 ausgegossen sein, die über seitliche Öffnungen in den Ausbuchtungen 43 eingebracht wird. Das Gehäuse 70 weist im Bereich zwischen dem äusseren Anschlag 18, der durch eine radiale nach aussen weisende Gehäusewand gebildet wird, und den Ausbuchtungen 43 eine Gehäuseerweiterung 73 auf, deren Innendurchmesser größer ist als der Innendurchmesser eines Gehäuseabschnitts 74, der sich an die Gehäuseerweiterung 73 in Richtung auf die Rastnut 17 anschließt und der kleiner ist als der Innendurchmesser im Bereich der Ausbuchtungen 43. Der Gehäuseabschnitt 74 besitzt einen Innendurchmesser, der größer ist als der Außendurchmesser des Wicklungsabschnitts 55 im Bereich der Rippe 56, so dass der Wicklungsabschnitt 55 mit radialem Spiel in diesem Gehäuseabschnitt 74 hineinragt. Weiterhin ist insbesondere aus Fig. 9 zu erkennen, dass in der Gehäuseerweiterung 73 eine Zwischenwandung 75, und zwar in jeder Gehäusehalbschale 71, ein Wandungsabschnitt 75a ausgebildet ist. Die Höhe jedes Wandungsabschnittes 75a ist kleiner als die Breite b der Halteärmchen 58, siehe Fig. 11. Zudem weist jeder Wandungsabschnitt 75a eine Fensterteilöffnung 76 auf, deren Höhe h, siehe Fig. 11, derart ist, dass die Halteärmchen 58 aufgenommen werden können. Die Zwischenwandung 75 ist derart in der Gehäuseerweiterung 73 angeordnet, dass im montierten Zustand bei der Lage der Halteärmchen 58 in einer Lage 90 ° zur Teilungsebene des Gehäuses 70 die Halteärmchen 58 in den Teil-Fensteröffnungen 76 aufgenommen werden, siehe Fig. 11 obere Hälfte, und in einer Lage der Halteärmchen 58 in der Teilungsebene des Gehäuses 70 die Halteärmchen 58 zwischen den Wandungsabschnitten 75a liegen, siehe Fig. 11, untere Hälfte. In beiden Stellungen werden die Öffnungen der Ösen 59 der Halteärmchen 58 durch diese Anordnung verschlossen. Im Bereich zwischen der Zwischenwandung 75 und den Ausbuchtungen 43 sind umlaufende Versteifungsrippen 78 im Inneren der Gehäuseerweiterung 73 ausgebildet. Die Gehäuseerweiterung 73 kann ebenfalls ganz oder teilweise mit einer Vergussmasse ausgegossen werden. Auf der der Gehäuseerweiterung 73 gegenüberliegenden Seite der Ausbuchtungen 43 weist das Gehäuse 70 einen Einführungsstutzen 79 für die Medienleitung 4 auf. Dieser Einführungsstutzen 79 besitzt einen Einführungsabschnitt 80, dessen Innendurchmesser dem Außendurchmesser der Medienleitung 4 entspricht, und einen an den Ausbuchtungen 43 endenden, eingeschnürten Zentrierabschnitt 81 für das Leitungsrohr 32. Der Zentrierabschnitt 81 weist innenliegende, umlaufende Rippen 82 auf, die einen Innendurchmesser umfassen, der dem Außendurchmesser des Leitungsrohrs 32 angepasst ist. Hierbei dient eine Übergangswandung 83 zwischen dem Einführungsabschnitt 80 und dem Zentrierabschnitt 81 als Anschlag für z. B. das als Wellrohr ausgebildete äußere Schutzrohr 33 der Medienleitung 4. Die das Gehäuse 70 bildenden Halbschalen 71 werden durch Rastmittel 11 zusammengehalten, die aus Rastlaschen 84 und Rastansätzen 85 bestehen können, die an der Außenseite des Einführungsabschnittes 80 und der Gehäuseerweiterung 73 angeformt sind Der erfindungsgemäße Aufbau der Gehäusehalbschalen 71 ermöglicht es, diese mit einem einzigen Formwerkzeug herzustellen.

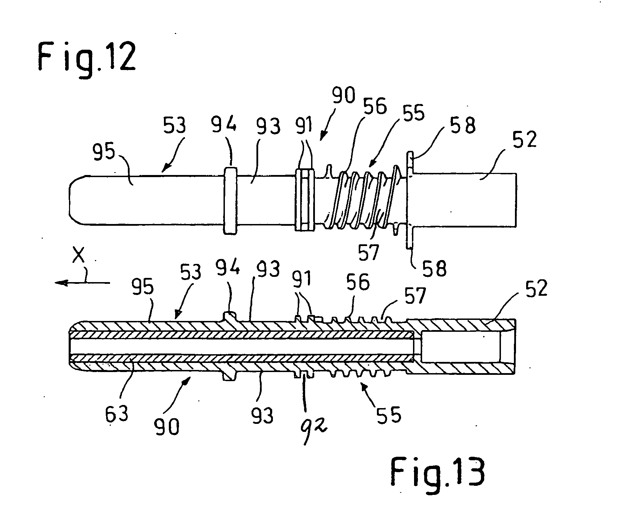

Es liegt ebenfalls im Rahmen der Erfindung, einen Verbinderkörper 90 zu verwenden, der ebenfalls die Rastfunktion der Steckerverbindung übernimmt, so dass das Gehäuse selbst nicht mit entsprechenden Rastmitteln ausgestattet werden muss. Eine derartige Ausführung ist in den Fig. 12 und 13 dargestellt. Hierbei sind gleiche Teile und Merkmale wie bei den Ausführungen der Fig. 1 bis 6 mit denselben Bezugsziffer versehen. Die dargestellte Ausführung ist für bekannte SAE-Verbindungen geeignet. Übereinstimmend zu Ausführung gemäß den Fig. 5 und 6 sind der Anschlussabschnitt 52 und der Wicklungsabschnitt 55. An den Wicklungsabschnitt 55 schließen sich in Steckrichtung X gesehen zwei beabstandete ringförmige Ansätze 91 an, die eine Haltenut 92 zwischen sich einschließen, die als Gehäuseaufnahme und Fixierung für ein nicht dargestelltes Gehäuse dient. Hieran schließt sich der Kupplungsabschnitt 53 an. Dieser besteht aus einem sich an die ringförmigen Ansätze anschließenden Fixierabschnitt 93, der von einem ringförmigen Haltebund 94 abgeschlossen wird. Der Fixierabschnitt 93 dient zur Aufnahme von im Steckeraufnahmeteil, das nicht dargestellt ist, gelagerten Haltemitteln. An den Haltebund 94 schließt sich der Einführungs- und Dichtabschnitt 95 an, an dem im Steckeraufnahmeteil vorhandene Dichtmittel im eingesetzten Zustand des Stecker- und Dichtabschnitts 95 dichtend anliegen. Um im Wicklungsabschnitt 55 erzeugte Wärme in den Einführungs- und Dichtabschnitt 95 weiterzuleiten, ist ein Wärmeleitelement 63 in dem Verbinderkörper 90 angeordnet, wozu auf die Beschreibung der Fig. 4, 8a, 8b, 8c, 8d verwiesen wird.

Erfindungsgemäß ist es ebenfalls möglich, bei der Ausführungsform gemäß Fig. 1 den Einsteckdom 31 durch den Anschlussabschnitt 52 und bei den Ausführungen gemäß Fig. 4 und 12 den Anschlussabschnitt 52 durch den Einsteckdom 31 zu ersetzen. Auch kann ein Wärmeleitelement 63 bei der Ausführung gemäß Fig. 1 vorgesehen sein.

Die Erfindung ist nicht auf das dargestellte Ausführungsbeispiel beschränkt, sondem umfasst auch weitere zu den beschriebenen Merkmalen äquivalente Ausführungsformen, insofern in den Ansprüchen beansprucht, So kann beispielsweise ebenfalls das Gehäuse 8 als Spritzgussteil um den mit der Medienleitung 4 verbundenen Vertiinderkörper 2 gespritzt sein.

## Patentansprüche

1. Konfektionierte Medienleitung (4) mit einem Leitungsverbinder (1), bestehend aus einem Verbinderkörper (2, 51) mit einem Anschlussabschnitt (3, 52), an dem eine Medienleitung (4) angeschlossen ist, und mit einem Kupplungsabschnitt (6, 53) mit Dichtmitteln (12) zum dichtenden Verbinden mit einem Gegenkupplungsteil, wobei die Medienleitung (4) mit einem Heizdraht (7) versehen ist sowie der Verbinderkörper (2, 51), die Medienleitung (4) und der Heizdraht (7) endseitig von einem Gehäuse (8, 70) umschlossen sind,
**dadurch gekennzeichnet, dass** die Dichtfunktion und eine Haltefunktion der dichtenden Verbindung mit dem Gegenkupplungsteil zwischen dem Gehäuse (8, 70) und dem Verbinderkörper (2, 51) aufgeteilt sind, so dass das Gehäuse (8, 70) Rastmittel (13) zur rastenden Verbindung mit dem Gegenkupplungsteil aufweist und die Rastmittel (13) an einem den Kupplungsabschnitt (6, 53) umschließenden Gehäuseabschnitt des Gehäuses (8, 70) zum Verrasten mit dem Gegenkupplungsteil ausgebildet sind.

2. Konfektionierte Medienleitung nach Anspruch 1,
**dadurch gekennzeichnet, dass** die Rastmittel (13) aus einem am Gehäuseumfang ausgebildeten, umfangsgemäß verlaufenden Rastnocken (16) bestehen, hinter dem in Einsteckrichtung (X) gesehen eine Rastnut (17) ausgebildet ist.

3. Konfektionierte Medienleitung nach Anspruch 1 oder 2,
**dadurch gekennzeichnet, dass** zwischen dem Gehäuse (8, 70) und dem Verbinderkörper (2, 51) im Bereich des Anschlussabschnittes (3, 52) ein Umfangsspaltabschnitt (19) zur Aufnahme der Medienleitung (4) und im Bereich des die Rastmittel (13) aufweisenden Kupplungsabschnitts (6) ein umfänglicher Spaltbereich (21) zur Aufnahme einer Wicklung des Heizdrahtes (7) ausgebildet sind, wobei insbesondere der Heizdraht (7) und die Heizwicklung (42) an eine in das Gehäuse (8) eingeführte elektrische Leitung zur Spannungsversorgung angeschlossen ist

4. Konfektionierte Medienleitung nach Anspruch 3,
**dadurch gekennzeichet, dass** die Medienleitung (4) aus einem inneren Leitungsrohr (32) besteht, an dessen Umfang der Heizdraht (7) angeordnet, insbesondere spiralförmig gewiskelt ist, sowie aus einem äußeren Schutzrohr (33), das insbesondere als Wellrohr ausgebildet ist, wobei der Heizdraht (7) mittels eines diesen umgebenden Klebebandes (34) auf dem Leitungsrohr (32) fixiert oder in einer Kunststoffschicht eingegossen ist und das Gehäuse (8, 70) im Bereich des Umfangsspaltabschnittes (19) an seiner Innenwand Umfangsrippen (38) aufweist, die in Wellentäler (39) des Wellrohrs (33) eingreifen.

5. Konfektionierte Medienleïtung nach einem der Ansprüche 1 bis 4,
**dadurch gekennzeichnet, dass** der Verbinderkörper (2, 51) derart bemessen ist, dass der Kupplungsabschnitt (6, 53) aus dem Gehäuse (8, 70) mit einem im Querschnitt kreiszylindrischen Steck- und Dichtabschnitt (22) herausragt.

6. Konfektionierte Medienleitung nach Anspruch 5,
**dadurch gekennzeichnet, dass** der Steck- und Dichtabschnitt (22) sowie ein sich an diesen anschließender im Querschnitt kreiszylindrischer Einführungsabschnitt (26) des Gehäuses (8, 70) denselben Außendurchmesser aufweisen, und an im in Einsteckrichtung (X) gesehen hinteren Ende des Einführungsabschnittes (26) die Rastrnittel (13) des Gehäuses (8, 70) ausgebildet sind.

7. Konfektionierte Medienleitung nach einem der Ansprüche 5 oder 6,
**dadurch gekenntzeichnet, dass** der Steck- und Dichtabschnitt (22) in seiner Umfangsfläche eine Umfangsnut (23) mit einer in dieser angeordneten Umfangsdichtung (24), insbesondere einem O-Dichtring besitzt,

8. Konfektionierte Medienleitung nach einem der Ansprüche 5 bis 7,
**dadurch gekennzeichnet, dsss** der Verbinderkorper in Einsteckrichtung (x) gesehen hinter dem Steck- und Dichtabschnitt (22) einen gegenüber dem Außendurchmesser im Durchmesser verringerten Körperabschnitt (27) aufweist wobei an der Umfangsfläche dieses Körperabschnitts (27) ein
ringförmiger Bund (28) vorhanden ist, so dass zwischen diesem und dem Steck-und Dichtabschnitt (22) eine Nut (29) zur Aufnahme eines an der Innenseite des Gehäuses (8) an dessen in Einsteckrichtung (X) gesehen vorderem Ende angeformten Haltefortsatzes (30) ausgebildet ist.

9. Konfektionierte Medienleitung nach Anspruch 8,
**dadurch gekennzeichnet, dass** zwischen dem im Durchmesser verringerten Körperabschnitt (27) und dem Einsteckdom (31) am Verbinderkörper (2) ein umlaufender Anschlag (35) für die Medienleitung (4) angeformt ist, wobei zwischen dem Außenumfang des Anschlages (35) und einer gegenüberliegenden Innenwand des Gehäuses (8) ein Spalt (36) zum Durchführen des Heizdrahtes (7) ausgebildet ist, und insbesondere der Anschlag (35) eine polygonale Umfangskontur als Verdrehsicherung besitzt.

10. Konfektionierte Medienleitung nach einem der Ansprüche 1 bis 9,
**dadurch gekennzeichnet, dass** der Verbinderkörper (51) aus Kunststoffmaterial besteht, und einen Anschlussabschnitt (52) für die Medienleitung (4) und einen Kupplungsabschnitt (53) zum dichtenden Verbinden mit einem Gegenkupplungsteil aufweist, wobei der Anschlussabschnitt (52) als hohlzylindrische Hülse mit einer Innenbohrung (54) ausgebildet ist, wobei sich an den Anschlussabschnitt (52) ein Wicklungsabschnitt (55) anschließt, auf dem die Heizwicklung (42) aufgewickelt ist, wobei der Wicklungsabschnitt (55) eine schraubenlinienförmig an seinem Umfang verlaufende Rippe (56) aufweist und zwischen den Rippenwindungen ein Abstandsbereich (57) ausgebildet ist, der zur Aufnahme des Wicklungsdrahtes der Heizwicklung (42) dient.

11. Konfektionierte Medienleitung nach Anspruch 10,
**dadurch gekennzeichnet, dass** sich zwischen der innenbohrung (54) und der Bohrung (60) ein umlaufender, radial nach innen ragender Ringkragen (61) befindet, der eine Anschlagfunktion besitzt und eine Durchlassöffnung (62) umschließt und der Durchlassquerschnitt der Durchlassöffnung (62) gleich dem Durchflussquerschnitt des Leitungsrohres (32) ist.

12. Konfekdonierte Medienleitung nach einem der Ansprüche 10 oder 11,
**dadurch gekennzeichet, dass** innerhalb des Bereiches des Wieklungsabschnitts (55) und des Kupplungsabschnittes (53) in deren Bohrung (60) sich ein aus einem gut wärmeleitenden Material. insbesondere Metall bestehendes Wärmeleitelement (63) befindet.

13. Konfektionierte Medienieitung nach einem der Ansprüche 10 bis 12,
**dadurch gekennzeichnet, dass** das Gehäuse (70) in Einsteckrichtung (X) gesehen vor der umlaufen den Rastnut (19) einen äußeren Anschlag (18) aufweist, und diametral gegenüberliegende Ausbuchtungen (43) aufweist, wobei das Gehäuse (70) im Bereich zwischen dem äußeren Anschlag (18) und den Ausbuchtungen (43) eine Gehäuseerweiterung (73) aufweist, deren Innendurchmesser größer ist als der eines Gehäuseabschnittes (74) hinter der Rastnut (17) in Einsteckrichtung (X) gesehen, und einen Innendurchmesser aufweist, der keiner ist als derjenige im Bereich der Ausbuchtungen (43) und in dieser Gehäuseerweiterung (73) der Wicklungsabschnitt (55) im Wesentlichen angeordnet ist.

14. Konfektionierte Medienleltung nach Anspruch 13,
**dadurch gekenntzeichnet, dass** in der Gehäuseerweiterung (73) eine Zwischenwandung (75) angeordnet ist, die aus in jeder Gehäusehalbschale (71) vorhandenen Wandungsabschniuen (75a) besteht und die Höhe jedes Wandungsabschnittes (75a) kleiner ist als die Breite der Halteärmchen (58) und jeder Wandungsabschnitt (75a) eine Fenster-Tellöffnung (76) aufweiset, deren Höhe (h) derart ist, dass die Halteärmchen (58) aufgenommen werden können, wobei die Zduischenvuandung (75) derart in der Gehäuseerweiterung (73) angeordnet ist, dass im montierten Zustand bei der Lage der Halteärmchen (58) in eine Lage 90 ° zur Teilungsebene des Gehäuses (70) die Halteärmchen (58) In den Fenster-Teilöffnungen (76) aufgenommen werden und in einer Lage der Halteärmchen (58) in der Tellungsebene des Gehäuses (70) die Halteärmchen (58) zwischen den Wandungsabschnitten (75a) liegen.

## Claims

1. A preassembled media line (4) with a line connector (1), consisting of a connector body (2, 51) with a connection section (3, 52) to which a media line (4) is connected, and with a coupling section (6, 53) with sealing means (12) for sealing connection to a mating coupling part, the media line (4) being provided with a heating wire (7), and the connector body (2, 51), the media line (4) and the heating wire (7) being surrounded at the end by a housing (8, 70), **characterised in that** the sealing function and a holding function of the sealing connection with the mating coupling part are divided up between the housing (8, 70) and the connector body (2, 51), so that the housing (8, 70) has latching means (13) for latching connection with the mating coupling part and the latching means (13) are formed on a housing section of the housing (8, 70) surrounding the coupling section (6, 53) for latching with the mating coupling part.

2. A preassembled media line according to Claim 1, **characterised in that** the latching means (13) consist of a latching cam (16) which is formed on the housing periphery and extends peripherally, behind which, viewed in the direction of insertion (X), a latching groove (17) is formed.

3. A preassembled media line according to Claim 1 or 2, **characterised in that** in the region of the connection section (3, 52) a peripheral gap section (19) for receiving the media line (4), and in the region of the coupling section (6) having the latching means (13) a peripheral gap region (21) for receiving a winding of the heating wire (7), are formed between the housing (8, 70) and the connector body (2, 51), with in particular the heating wire (7) and the heating winding (42) being connected to an electric line for supplying power which is introduced into the housing (8).

4. A preassembled media line according to Claim 3, **characterised in that** the media line (4) consists of an inner line tube (32), on the periphery of which the heating wire (7) is arranged, in particular is helically wound, and also of an outer protective tube (33), which is formed in particular as a corrugated tube, the heating wire (7) being fixed to the line tube (32) by means of an adhesive strip (34) which surrounds it or being embedded in a plastics layer, and the housing (8, 70) in the region of the peripheral gap section (19) having peripheral ribs (38) on its inner wall which engage in corrugation troughs (39) of the corrugated tube (33).

5. A preassembled media line according to one of Claims 1 to 4, **characterised in that** the connector body (2, 51) is of such dimensions that the coupling section (6, 53) projects out of the housing (8, 70) with a plugging and sealing section (22) which is of circular-cylindrical cross-section.

6. A preassembled media line according to Claim 5, **characterised in that** the plugging and sealing section (22) and also an introduction section (26) of the housing (8, 70) which adjoins it and is of circular-cylindrical cross-section have the same external diameter, and the latching means (13) of the housing (8, 70) are formed on the rear end, viewed in the direction of insertion (X), of the introduction section (26).

7. A preassembled media line according to one of Claims 5 or 6, **characterised in that** the plugging and sealing section (22) has in its peripheral surface a peripheral groove (23) with a peripheral seal (24), in particular an O-ring seal, arranged therein.

8. A preassembled media line according to one of Claims 5 to 7, **characterised in that** the connector body, viewed in the direction of insertion (X), has behind the plugging and sealing section (22) a body section (27) which is reduced in diameter compared with the external diameter, with an annular collar (28) being present on the peripheral surface of this body section (27), so that a groove (29) for receiving a holding projection (30) formed on the inside of the housing (8) at the front end thereof, viewed in the direction of insertion (X), is formed between said collar and the plugging and sealing section (22).

9. A preassembled media line according to Claim 8, **characterised in that** between the body section (27) of reduced diameter and the insertion spigot (31) a circumambient stop (35) for the media line (4) is formed on to the connector body (2), with a gap (36) for passing the heating wire (7) through being formed between the outer periphery of the stop (35) and an opposing inner wall of the housing (8), and in particular the stop (35) having a polygonal peripheral contour as anti-rotation means.

10. A preassembled media line according to one of Claims 1 to 9, **characterised in that** the connector body (51) consists of plastics material, and has a connection section (52) for the media line (4) and a coupling section (53) for sealing connection to a mating coupling part, the connection section (52) being formed as a hollow-cylindrical sleeve with an internal bore (54), a winding section (55) adjoining the connection section (52), on which winding section the heating winding (42) is wound, the winding section (55) having a rib (56) which extends helically on its periphery and a spacer region (57) being formed between the rib windings, which region serves to accommodate the winding wire of the heating winding (42).

11. A preassembled media line according to Claim 10, **characterised in that** a circumambient ring collar (61) which projects radially inwards is located between the internal bore (54) and the bore (60), which collar has a stop function and surrounds a passage opening (62), and the passage cross-section of the passage opening (62) is equal to the throughflow cross-section of the line tube (32).

12. A preassembled media line according to one of Claims 10 or 11, **characterised in that** within the region of the winding section (55) and of the coupling section (53) in the bore (60) thereof there is a heat conduction element (63) made of a material which conducts heat well, in particular metal.

13. A preassembled media line according to one of Claims 10 to 12, **characterised in that** the housing (70), viewed in the direction of insertion (X), in front of the circumambient latching groove (17) has an outer stop (18), and diametrically opposing protrusions (43), the housing (70) in the region between the outer stop (18) and the protrusions (43) having a widened housing section (73), the internal diameter of which is greater than that of a housing section (74) behind the latching groove (17), viewed in the direction of insertion (X), and having an internal diameter which is smaller than that in the region of the protrusions (43), and the winding section (55) being substantially arranged in this widened housing section (73).

14. A preassembled media line according to Claim 13, **characterised in that** a partition (75) is arranged in the widened housing section (73), which partition consists of wall sections (75a) present in each housing half-shell (71) and the height of each wall section (75a) is smaller than the width of the holding arms (58) and each wall section (75a) has a partial window opening (76), the height (h) of which is such that the holding arms (58) can be accommodated, the partition (75) being arranged in the widened housing section (73) such that in the assembled state when the holding arms (58) are in a position at 90° to the parting plane of the housing (70) the holding arms (58) are received in the partial window openings (76), and in a position of the holding arms (58) in the parting plane of the housing (70) the holding arms (58) lie between the wall sections (75a).

## Revendications

1. Conduite de fluide (4) surmoulée, comportant un raccord de conduites (1), formé par un corps de raccord (2, 51) avec une partie de raccordement (3, 52), à laquelle est raccordée une conduite de fluide (4), et avec une partie de couplage (6, 53) avec des moyens d'étanchéité (12) pour un assemblage étanche avec une partie de couplage complémentaire, ladite conduite de fluide (4) étant munie d'un filament chauffant (7), et le corps de raccord (2, 51), la conduite de fluide (4) et le filament chauffant (7) étant entourés en extrémité par un boîtier (8, 70),
**caractérisée en ce que** la fonction d'étanchéité et une fonction de fixation de l'assemblage étanche avec la partie de couplage complémentaire sont partagées entre le boîtier (8, 70) et le corps de raccord (2, 51), de telle sorte que le boîtier (8, 70) comporte des moyens de blocage (13) pour un assemblage par encliquetage avec la partie de couplage complémentaire, et les moyens de blocage (13) sont réalisés pour l'encliquetage avec la partie de couplage complémentaire, sur la partie du boîtier (8, 70), qui entoure la partie de couplage (6, 53).

2. Conduite de fluide surmoulée selon la revendication 1, **caractérisée en ce que** les moyens de blocage (13) sont formés par un ergot de blocage (16) périphérique, qui est réalisé sur le pourtour du boîtier et en aval duquel, par référence au sens d'enfichage (X), est réalisée une rainure de blocage (17).

3. Conduite de fluide surmoulée selon la revendication 1 ou 2, **caractérisée en ce qu'**entre le boîtier (8, 70) et le corps de raccord (2, 51) sont réalisés, dans la zone de la partie de raccordement (3, 52), une partie rainurée périphérique (19) destinée à recevoir la conduite de fluide (4), et, dans la zone de la partie de couplage (6) munie des moyens de blocage (13), une zone en creux (21) périphérique destinée à recevoir un enroulement du filament chauffant (7), dans laquelle, en particulier, le filament chauffant (7) et le bobinage chauffant (42) sont raccordés à une ligne électrique introduite dans le boîtier (8) pour la fourniture de la tension.

4. Conduite de fluide surmoulée selon la revendication 3, **caractérisée en ce que** la conduite de fluide (4) est formée par un tube conducteur (32) intérieur, sur la périphérie duquel est disposé, en particulier est enroulé en spirale, le filament chauffant (7), ainsi que par un tube de protection (33) extérieur, qui est réalisé en particulier sous forme de tube ondulé, dans laquelle ledit filament chauffant (7) est fixé sur le tube conducteur (32) au moyen d'une bande adhésive (34) entourant ledit filament ou est coulé dans une couche en matière plastique, et le boîtier (8, 70), dans la zone de la partie rainurée périphérique (19), comporte sur sa paroi intérieure des nervures périphériques (38) qui s'engagent dans les creux (39) du tube ondulé (33).

5. Conduite de fluide surmoulée selon l'une quelconque des revendications 1 à 4, **caractérisée en ce que** le corps de raccord (2, 51) est dimensionné de telle sorte que la partie de couplage (6, 53) s'avance hors du boîtier (8, 70) avec un tronçon d'enfichage et d'étanchéité (22) de section cylindrique circulaire.

6. Conduite de fluide surmoulée selon la revendication 5, **caractérisée en ce que** le tronçon d'enfichage et d'étanchéité (22), ainsi qu'un tronçon d'introduction (26) de section cylindrique circulaire, adjacent à ce dernier, sur le boîtier (8, 70) ont le même diamètre extérieur, et les moyens de blocage (13) du boîtier (8, 70) sont réalisés, par référence au sens d'enfichage (X), à l'extrémité arrière du tronçon d'introduction (26).

7. Conduite de fluide surmoulée selon la revendication 5 ou 6, **caractérisée en ce que** le tronçon d'enfichage et d'étanchéité (22) comporte, sur sa surface périphérique, une rainure périphérique (23) avec une garniture d'étanchéité périphérique (24), en particulier un joint torique, insérée dans ladite rainure.

8. Conduite de fluide surmoulée selon l'une quelconque des revendications 5 à 7, **caractérisée en ce que** le corps de raccord comporte, en aval du tronçon d'enfichage et d'étanchéité (22) par référence au sens d'enfichage (X), une partie de corps (27) de diamètre réduit par rapport au diamètre extérieur, dans laquelle sur la face périphérique de ladite partie de corps (27) est prévue une collerette (28) annulaire, de telle sorte qu'entre celle-ci et le tronçon d'enfichage et d'étanchéité (22) se forme une rainure (29) destinée à recevoir une saillie de fixation (30), formée sur la face intérieure du boîtier (8) à l'extrémité avant de ce dernier, par référence au sens d'enfichage (X).

9. Conduite de fluide surmoulée selon la revendication 8, **caractérisée en ce qu'**entre la partie de corps (27) de diamètre réduit et le mandrin enfichable (31) sur le corps de raccord (2) est formée une butée (35) périphérique pour la conduite de fluide (4), dans laquelle entre le pourtour extérieur de la butée (35) et une paroi intérieure du boîtier (8), située en regard de ladite butée, est réalisée une fente (36) pour le passage du filament chauffant (7), et en particulier la butée (35) a un contour périphérique polygonal empêchant toute rotation.

10. Conduite de fluide surmoulée selon l'une quelconque des revendications 1 à 9, **caractérisée en ce que** le corps de raccord (51) est réalisé en matière plastique et comporte une partie de raccordement (52) pour la conduite de fluide (4) et une partie de couplage (53) pour l'assemblage étanche avec une partie de couplage complémentaire, dans laquelle ladite partie de raccordement (52) est réalisée sous la forme d'un manchon cylindrique creux avec une forure intérieure (54), dans laquelle ladite partie de raccordement (52) est adjacente à une partie de bobinage (55), sur laquelle est enroulé le bobinage chauffant (42), dans laquelle la partie de bobinage (55) comporte une nervure (56), qui s'étend sur son pourtour en forme de spirale, et une zone d'espacement (57) étant réalisée entre les spires de la nervure et étant destinée à recevoir le filament du bobinage chauffant (42).

11. Conduite de fluide surmoulée selon la revendication 10, **caractérisée en ce qu'**entre la forure intérieure (54) et la forure (60) se situe un collet annulaire (61) périphérique s'avançant radialement vers l'intérieur, lequel possède une fonction de butée et délimite une ouverture de passage (62), et la section de passage de l'ouverture de passage (62) est égale à la section de passage du tube conducteur (32).

12. Conduite de fluide surmoulée selon la revendication 10 ou 11, **caractérisée en ce qu'**à l'intérieur de la zone de la partie de bobinage (55) et de la partie de couplage (53), dans la forure (60) de celle-ci, est disposé un élément thermoconducteur (63) réalisé dans un matériau bon conducteur thermique, en particulier du métal.

13. Conduite de fluide surmoulée selon l'une quelconque des revendications 10 à 12, **caractérisée en ce que** le boîtier (70) comporte, par référence au sens d'enfichage (X), en amont de la rainure de blocage (17) périphérique, une butée (18) extérieure et des rehaussements (43) diamétralement opposés, dans laquelle le boîtier (70) comporte dans la zone entre la butée (18) extérieure et les rehaussements (43) un élargissement (73) dont le diamètre intérieur est supérieur à celui d'une partie de boîtier (74) en aval de la rainure de blocage (17), par référence au sens d'enfichage (X), et un diamètre intérieur inférieur à celui dans la zone des rehaussements (43), et la partie de bobinage (55) est disposée sensiblement dans cet élargissement (73) du boîtier.

14. Conduite de fluide surmoulée selon la revendication 13, **caractérisée en ce que** dans l'élargissement (73) du boîtier est disposée une cloison (75) qui est formée par des portions de paroi (75a), présentes dans chaque demi-coque (71) du boîtier, et la hauteur de chaque portion de paroi (75a) est inférieure à la largeur des petits bras de retenue (58), et chaque portion de paroi (75a) comporte une ouverture partielle de type fenêtre (76), dont la hauteur (h) est telle qu'elle peut recevoir les petits bras de retenue (58), dans laquelle la cloison (75) est disposée dans l'élargissement (73) du boîtier, de telle sorte que dans la position montée, lorsque les petits bras de retenue (58) sont positionnés à 90° par rapport au plan de séparation du boîtier (70), les petits bras de retenue (58) sont reçus dans les ouvertures partielles de type fenêtre (76) et, lorsque les petits bras de retenue (58) sont positionnés dans le plan de séparation du boîtier (70), les petits bras de retenue (58) sont situés entre les portions de paroi (75a).
